# EUROPEAN PATENT APPLICATION

(11) **EP 1 348 798 A1**
(43) Date of publication of application: **01.10.2003**
(21) Application number: 03251924.1
(22) Date of filing: 27.03.2003
(51) Int. Cl.: D06M 15/564, D06M 15/53, C03C 25/10, C03C 25/32

(54) **Surface protection material and method**

(30) Priority: 28.03.2002 US 109365
(71) Applicant: Depuy Products, Inc., Warsaw, Indiana 46581 (US)
(72) Inventor: Feeney, Robert D., Scituate, MA (US); Roman, Vicen, Bayamon (PR); Schnitzer, Helge, 82216 Maisach (DE)
(74) Representative: Belcher, Simon James

(57) **Abstract**

The surface of a substrate is protected by means of a curable resin disposed on the substrate, the resin being substantially devoid of an antifoaming agent.

## Description

The present disclosure relates generally to a material and associated method for protecting a surface, and particularly to a material and associated method for protecting a surface from scratches and/or other defects caused by the surface coming into contact with a handling mechanism.

Material handling mechanisms, such as robotic arms having grasping members, are utilized in various manufacturing techniques to grasp and move components from one processing station to the next processing station. For example, a robotic arm may grasp a polished metallic automobile component and move it into a position to be painted. However, a drawback to moving components in this manner is that the handling mechanism may scratch, or cause other types of defects, in the surface of the component being moved.

In an attempt to address this problem, various articles have been interposed between the handling mechanism and the component being moved to prevent the aforementioned scratching and defects. However, contacting the component with these articles tends to contaminate the surface of the component with various substances including antifoaming agents. Contaminating the surface of the component can cause problems in subsequent processing steps of the manufacturing process. For example, contaminating the surface of a polished metallic component with an antifoaming agent can result in paint being disposed onto the surface having peeling, blistering, puddling, and/or density variation problems. Accordingly, it is desirable not to contaminate the surface of a component during a manufacturing process.

In accordance with one exemplary embodiment, there is provided a material which includes a substrate and a curable resin disposed on the substrate. The material is substantially devoid of an antifoaming agent.

In accordance with another exemplary embodiment, there is provided a material which includes a substrate and a curable resin disposed on the substrate. The material is substantially devoid of a polysiloxane antifoaming agent.

In accordance with yet another exemplary embodiment, there is provided a material for protecting a surface of a metal component. The material includes a substrate having synthetic fibres and a curable resin disposed on the substrate. The material is substantially devoid of a polysiloxane antifoaming agent.

In accordance with still another exemplary embodiment, there is provided a method of protecting a surface. The method includes contacting the surface with a material which includes a substrate having a curable resin disposed thereon, wherein the material is substantially devoid of a polysiloxane antifoaming agent.

In accordance with yet another exemplary embodiment, there is provided a method of protecting a surface of a component from a handling mechanism. The method includes positioning a material which includes a substrate and a curable resin disposed on the substrate, wherein the material is substantially devoid of an antifoaming agent, between the surface of the component and the handling mechanism.

Accordingly, the present invention provides material for protecting a surface, such as a polished metallic surface, from scratches and/or other defects caused by the surface coming into contact with a handling mechanism. The material is substantially devoid of an antifoaming agent and includes a substrate and a curable resin disposed on the substrate.

The substrate of the materials described herein can be made from any number of semi-rigid or flexible physical structures upon which a curable resin can be disposed. For example, the substrate can be configured as a woven fabric, a non-woven fabric (including apertured, ordered or patterned non-woven fabrics), a knitted fabric, a sheet, a mesh, a cloth, a bandage, a tape, a net, a scrim, and/or a film. In particular, the substrate of the materials described herein can be made from any of the substrates utilized to accept a curable resin present in orthopaedic casting materials. In particular, the substrate can be made from synthetic and/or natural substances including, but not limited to, cotton, polyamide (including those sold under the trade names Nylon and Kevlar), acrylic, polyolefin (e.g. polypropylene and polyethylene), rayon, fibreglass, polyarylamide, and polyester.

It should be appreciated that the substrate is preferably fibrous or porous such that at least a portion of the substrate, and preferably most of the substrate, is impregnated with the curable resin. As used herein, the term "impregnated" means thoroughly intermingled with the physical structure of the substrate. In addition, the substrate having the uncured resin disposed thereon should be flexible enough to conform to irregular shapes when the substrate is positioned in contact with an object, such as a handling mechanism.

As previously mentioned the materials described herein include a curable resin disposed on the above described substrate. The curable resin can be disposed on the substrate by any appropriate technique known in the art of manufacturing orthopaedic casting materials. In addition, after the curable resin is disposed on the substrate, this combination can be further subjected to any appropriate technique known in the art of manufacturing orthopaedic casting materials deemed necessary.

It should be understood that the curable resin hardens and reinforces the substrate when the resin is cured thereon. Curable resins which can be utilized in the materials described herein include, but are not limited to, any of the curable resins utilized to harden and reinforce a substrate present in an orthopaedic casting material with the provision that, as discussed in greater detail below, the curable resin is substantially devoid of an antifoaming agent.

The curable resin should be sufficiently reactive to insure rapid hardening of the material once curing is initiated. However, the curable resin should not be so reactive upon cure initiation that it does not allow sufficient working time to apply and shape the material to the desired physical configuration. In particular, the material should adhere to itself, be pliable, and formable early after initiating the curing process. A short time period after initiating the curing process the material should become rigid, or at least, semi-rigid, and strong enough to support anticipated loads and stresses it will be subjected to, e.g. loads and stresses the material will encounter during its use as a protective covering for the surface of a metallic part. Accordingly, the materials described herein should undergo a change of state from a viscoelastic condition (e.g., a mouldable putty) to a solid condition in a matter of minutes. For example, curable urethane resins formed by the reaction of a polyisocyanate and a polyol such as those disclosed in US-4131114 can be utilized. A number of classes of water-curable resins known in the art are also suitable, including polyurethanes, cyanoacrylate and esters. For example, US-3932526 discloses that 1,1-bis (perfluoromethylsulfonyl)-2-aryl ethylenes cause epoxy resins containing traces of moisture to become polymerized.

Curable resin systems other that those which are water-curable may be used, although the use of water to activate the hardening of the material is convenient. For example, curable resins such as those disclosed in US-3908644, in which a bandage is impregnated with difunctional acrylates or methacrylates, such as the bis-methacrylate ester derived from the condensation of glycidyl methacrylate and bisphenol A (4,4'-isopropyl-idenediphenol) are suitable. The resin is hardened upon wetting with solutions of a tertiary amine and an organic peroxide.

Also, the water utilized to cure the material may contain a catalyst or initiator. For example, US-3630194 discloses an orthopaedic tape impregnated with acrylamide monomers whose polymerization is initiated by dipping the bandage in an aqueous solution of oxidizing and reducing agents (known in the art as a redox initiator system).

This invention is concerned with embodiments of the material wherein water-curable isocyanate-functional prepolymers or water reactive liquid organometallic compounds are employed as the curable resin. Some curable resins for use in the present invention are water-curable, isocyanate-functional prepolymers. Suitable systems of this type are disclosed, for example, in US-4411262, and in US-4502479. A water-curable isocyanate-functional prepolymer as used herein means a prepolymer derived from a polyisocyanate compound and a reactive hydrogen compound or oligomer (e.g., a "polyol"). As used herein, a reactive hydrogen compound is a compound having active hydrogen in accordance with the well known Zerevitinov test as described, for example, in Chemistry of Organic Compounds by Carl R. Noller, Chapter 6, pp. 121-122 (1957). The prepolymer has sufficient isocyanate-functionality to cure upon exposure to water, e.g., moisture vapour, or preferably liquid water.

A polyisocyanate prepolymer can be formed by the reaction of an isocyanate and a polyol. An isocyanate which has low volatility such as diphenylmethane diisocyanate (MDI) can be utilized rather than a more volatile material such as toluene diisocyanate (TDI). Suitable isocyanates include 2,4-toluene diisocyanate, 2,6-toluene diisocyanate, mixture of these isomers, 4,4'-diphenylmethane diisocyanate, 2,4'- diphenylmethane diisocyanate, mixture of these isomers together with possible small quantities of 2,2'-diphenylmethane diisocyanate (typical of commercially available diphenylmethane diisocyanate), and aromatic polyisocyanates and their mixture such as are derived from phosgenation of the condensation product of aniline and formaldehyde. Typical polyols for use in the prepolymer system include polyalkylene oxides (e.g., polyethylene oxide and polybutylene oxide), polypropylene ether glycols (available from Arco Chemical under the trade name Arcol PPG and from BASF Wyandotte under the trade name Pluracol), polytetramethylene ether glycols (such as those sold under the trade names Polymeg by the Quaker Oats Co, and Terathane by Du Pont), polycaprolactone diols (such as the series of polyols sold under the trade name Tone by Union Carbide), and polyester polyols (hydroxyl terminated polyesters obtained from esterification of dicarboxylic acids and diols such as the polyols sold by Ruco Division of Hooker Chemical Co under the trade name Rucoflex). By using high molecular weight polyols, the rigidity of the cured resin can be reduced.

One example of a curable resin useful in the materials disclosed herein uses an isocyanate sold under the trade name Isonate 2143L by the Dow Chemical Company (a mixture of di- and tri-isocyanates containing about 73% of MDI) and a polypropylene oxide polyol sold by Union Carbide under the trade name Niax PPG725. Benzoyl chloride or another suitable stabilizer can be included from about 0.01 to about 1.0 percent by weight (based on total resin weight).

The reactivity of the resin once it is exposed to the curing agent (e.g. water) can be controlled by the use of a suitable amount of proper catalyst. The reactivity should not be so great that: (1) a hard film quickly forms on the resin surface preventing further penetration of the water into the bulk of the resin; or (2) the material becomes rigid before the application and shaping is complete. These criteria can be satisfied using 4-[2-[1-methyl-2-(4-morpholinyl)ethoxy]ethyl]- morpholine ("MEMPE") prepared as described in US-4705840 and 2,2' dimorphiolinodiethyl ether ("DMDEE") prepared as disclosed in US-4433680, at a concentration of about 0.05 to about 5 percent by weight (based on total resin weight).

As previously mentioned, the materials described herein include a substrate and a curable resin disposed on the substrate. However, as indicated above, the materials described herein are substantially devoid of any antifoaming agents. What is meant herein by "substantially devoid of an antifoaming agent" is that the material either (i) contains no antifoaming agent or (ii) contains such a small amount of an antifoaming agent that when the material comes into contact with a surface, such as a metallic surface, no antifoaming agent is transferred from the material to the surface, or such a small amount of antifoaming is transferred from the material to the surface that the antifoaming agent does not appreciably interfere with subsequent processes to which the surface is subjected. For example, after placing a metallic surface in contact with a material described herein the metallic surface can be painted without any of the undesirable affects associated with having an antifoaming agent disposed on its surface, including, but not limited to, pealing of the paint, bubbling of the paint, and/or an uneven paint deposition on the metallic surface.

What is meant herein by an "antifoaming agent" is a substance, such as a surfactant, that inhibits the formation of bubbles in a liquid during its agitation by reducing the surface tension of the liquid. Examples of antifoaming agents include, but are not limited to, fluorosurfactants, fluorosilicone surfactants, and microparticle technology. Additional antifoaming agents include polysiloxanes, such as polydialkylsiloxanes and polydimethylsiloxanes, which have the general formula: 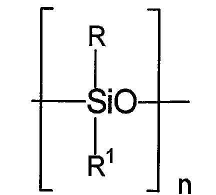 where R and R¹ are the same or different alkyl groups and n is an integer. Specific examples of the aforementioned silicone based antifoaming agents include Dow Corning 200 silicone fluids.

Embodiments of the present invention will now be described by way of example with reference to the accompanying drawings, in which:
FIG. 1 is a fragmentary view of a handling mechanism; and
FIG. 2 is a fragmentary view of the handling mechanism of FIG. 1 grasping a component of an automobile.

A specific example of one embodiment of a formulation of a curable resin that is substantially devoid of an antifoaming agent which can be disposed on a substrate to form a material described herein is set forth below in parts by weight:

| PARTS | COMPONENT |
|---|---|
| 4696 | Isonate 2143L NCO content 29.0% nominal (commercially available from DOW Chemical Company, located in Midland, Michigan) |
| 1428 | Pluracol P1010 (commercially available from BASF Corporation located in Budd Laje, New Jersey) or Poly-G 20-113 (commercially available from the Olin Corporation located in Norwalk, Connecticut) dried to less than 200 ppm water, hydroxyl number 113 nominal |
| 1044 | Poly-G 36-232 (commercially available from the Olin Corporation located in Norwalk, Connecticut) dried to less than 200 ppm water, hydroxyl number 232 nominal |
| 125 | TEXACAT Catalyst DMDEE (commercially available from Texaco Inc. located in White Plains, New York) |
| 306 | Benzoyl Chloride (commercially available from Aldrich located in Milwaukee, Wisconsin) |
| 90 | Aerosil R-974 (also labelled R-972/200) Fumed Silica (commercially available from the Degussa Corporation. located in Parsippany, New Jersey) |
| 72 | BHT CAO-3 (commercially available from PMC Inc. located in Sun Valley, California) |
| 36 | Tinuvin 328 (commercially available from Ciba Specialty Chemicals Corporation located in Tarrytown, New York) |

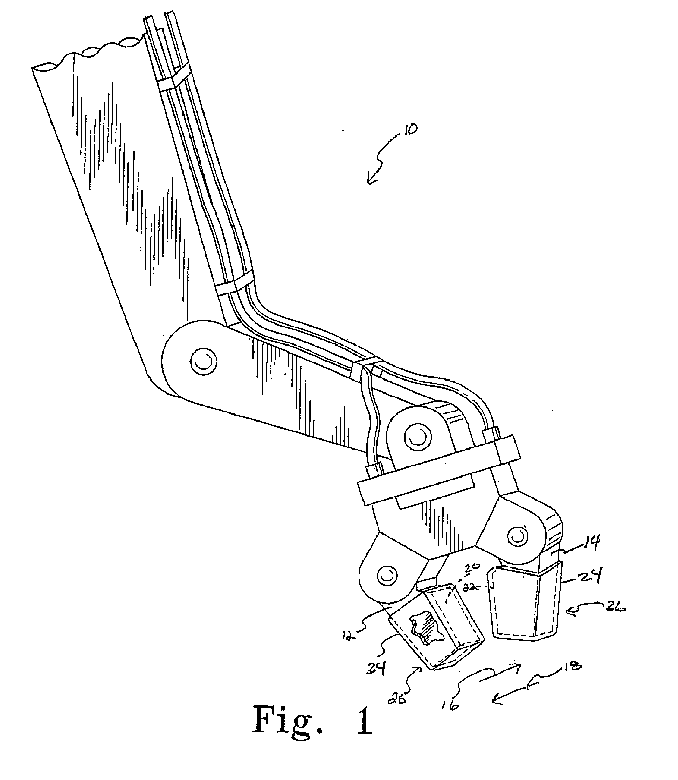

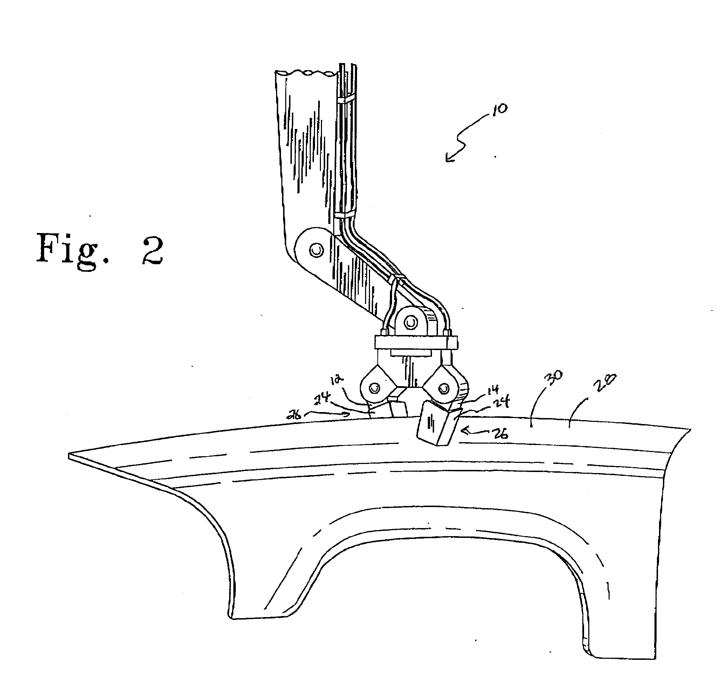

As previously mentioned, one use for the materials described herein is the protection of a surface from scratches and/or other defects caused by the surface coming into contact with a handling mechanism. For example, as shown in FIGS. 1 and 2, the materials described herein can be utilized to protect a surface from scratches and/or other defects caused by the surface coming into contact with a robotic arm 10 of a handling mechanism. In particular, robotic arm 10 includes (i) a grasping member 12 having a surface 20 and (ii) a grasping member 14 having a surface 22. Grasping members 12 and 14 are movable relative to one another in the directions indicated by arrows 16 and 18. Accordingly, robotic arm 10 can grasp and move components positioned between grasping members 12 and 14 in a well known fashion. As shown in FIG. 1, a material 24 described herein (i.e. a material which includes a substrate and a curable resin disposed thereon, the material being substantially devoid of an antifoaming agent) can be placed in contact with surface 20 and surface 22 of grasping members 12 and 14, respectively. In particular, material 24 is disposed relative to robotic arm 10 so that material 24 forms a sheath or casing 26 around each grasping member 12 and 14. As discussed above, water can be utilized to activate the hardening of material 24 covering grasping members 12 and 14 (i.e. contacting material 24 with an appropriate amount of water to cause curing). Accordingly, after curing, material 24 forms a hardened shell disposed around each grasping member 12 and 14.

As shown in FIG. 2, after curing material 24, grasping members 12 and 14 of robotic arm 10 can be utilized to grasp and move a component 28, such as a component of an automobile. In particular, component 28 is interposed grasping members 12 and 14, and then grasping members 12 and 14 are moved toward one another until material 24 comes into contact with component 28. Accordingly, robotic arm 10 grasps component 28 with (i) material 24 interposed between surface 20 of grasping member 12 and surface 30 of component 28 and (ii) material 24 interposed between surface 22 of grasping member 14 and surface 30 of component 28. Therefore, it should be appreciated that material 24 prevents grasping members 12 and 14 from scratching, or causing any other types of defects on, surface 30 of component 28.

In addition, it should be appreciated that since material 24 is substantially devoid of antifoaming agents, having material 24 in contact with surface 30 of component 28 does not result in an antifoaming agent, such as a polysiloxane, being transferred from material 24 to surface 30. Accordingly, surface 30 of component 28 is not contaminated with an antifoaming agent and thus can be processed further without interference from these types of compounds. For example, surface 30 of component 28 can be painted without the paint having peeling, blistering, puddling, or density variation problems caused by having an antifoaming agent contaminate present on surface 30.

## Claims

1. A material comprising a substrate; and a curable resin disposed on said substrate, wherein said material is substantially devoid of an antifoaming agent, especially a polysiloxane antifoaming agent.

2. The material of claim 1, in which the substrate includes fibres.

3. The material of claim 1, in which the fibres are selected from the group consisting of fibreglass fibres and polyester fibres.

4. The material of claim 1, in which the curable resin is water curable.

5. The material of claim 1, in which the curable resin includes a polyurethane.

6. A method of protecting a surface, which includes the step of contacting said surface with a material which includes a substrate having a curable resin disposed thereon, wherein said material is substantially devoid of an antifoaming agent, especially a polysiloxane antifoaming agent.

7. The method of claim 6, which includes curing the curable resin prior to contacting the surface with said material.
